# EUROPEAN PATENT SPECIFICATION

(11) **EP 1 377 075 B1**
(45) Date of publication and mention of the grant of the patent: **17.06.2015**
(21) Application number: 03007322.5
(22) Date of filing: 31.03.2003
(51) Int. Cl.: H04N 9/31

(54) **Illumination optical system and image display apparatus including the same**
Optisches Beleuchtungssystem und Bildanzeigeeinrichtung mit diesem System
Système d'illumination optique et appareil d'affichage d'image le comprenant

(30) Priority: 25.06.2002 KR 2002035672
(43) Date of publication of application: 02.01.2004
(73) Proprietor: Samsung Electronics Co., Ltd., Suwon-si, Gyeonggi-do, 443-742 (KR)
(72) Inventor: Lee, Young-choi, Suwon-si, Gyeonggi-do (KR)
(74) Representative: Grünecker Patent- und Rechtsanwälte PartG mbB

(56) References cited:
- EP-A- 0 985 952
- WO-A-01/26383
- US-A- 5 946 056
- US-A- 5 995 303
- US-A- 6 141 151
- US-A1- 2001 048 560
- EDWARD H. STUPP, MATTHEW S. BRENNESHOLTZ: "Projection displays" 1999, JOHAN WILEY & SONS , CHICHESTER 301240 , XP002420443 7.3.2.1 Dichroic filters at non-normal incidence

## Description

### BACKGROUND OF THE INVENTION

### 1. Field of the Invention

The present invention relates to an illumination optical system and an image display apparatus including the same, and more particularly, to an illumination optical system including a light separation/integration device having a diffraction device, and an image display apparatus including the illumination optical system.

### 2. Description of the Related Art

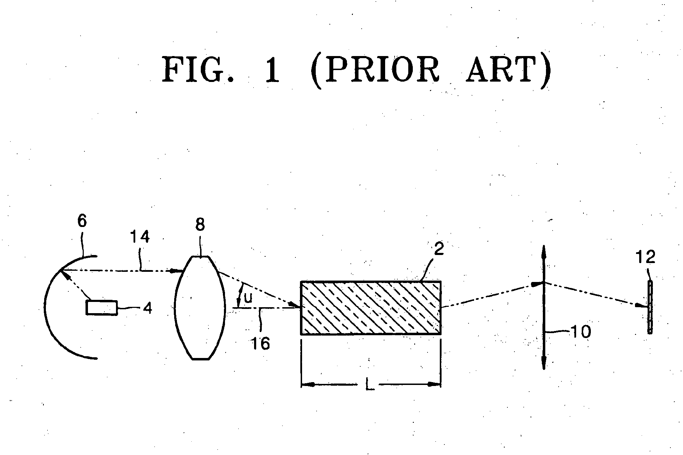

FIG. 1 is a diagram of an apparatus for uniformly illuminating a light valve, which is disclosed in U.S. Patent No. 5,625,738. Referring to FIG. 1, the conventional illumination apparatus includes a light source 4 having a focusing mirror 6, a collecting lens 8 disposed adjacent to the light source 4 to collect light from the light source 4, and a light tunnel 2 receiving light collected by the collecting lens 8. The light tunnel 2 may be a hollow with interior reflecting walls or space filled with a light transparent material. The light tunnel 2 has length L and a rectangular cross section.

Light emitted from the light source 4 is incident on the light tunnel 2 at an angle "u" with a line 16, the longitudinal axis of the light tunnel 2, and then the intensity of the light is uniformed while the light passes through the light tunnel 2. The light passed through the light tunnel 2 is shaped and relayed to a light valve 12 by a relay means 10.

In order to embody a color image, such a conventional illumination apparatus also includes a color filter, a color wheel, or an X-cube as a color switching device on an optical path between the collecting lens 8 and the light tunnel 2 to separate light according to predetermined wavelengths. However, when light is separated using a color wheel or a color filter, only a single color light beam in white light passes through a predetermined region of the color wheel or color filter, so light efficiency is degraded. When the X-cube is used, since light incident from an existing light source diverges, light reflectivity or transmissivity of a coating layer of the X-cube at the boundary decreases, so the entire efficiency of emitted light decreases. This is because the reflectivity or transmissivity of the coating layer of the X-cube depends on the diverging angle of light.

In addition, an optical element, such as the light tunnel 2, for uniformizing the intensity of light must be lengthened when the numerical aperture of light incident from a light source is small. Accordingly, it is difficult to manufacture a light and compact image display apparatus with this optical element.

US 2001/0048560 A1 discloses a video display apparatus, wherein beams of light of red, green and blue are introduced into a dichroic prism.

EP 0 985 952 A1 discloses an optical system, wherein a diffraction grating is used to convert beams of point light sources to parallel beams.

### SUMMARY OF THE INTENTION

The present invention provides an illumination optical system according to independent claim 1. Preferred embodiments are defined in the dependent claims 2-7. The invention further provides an image display apparatus according to claims 8-17 which comprises the illumination optical system.

### BRIEF DESCRIPTION OF THE DRAWINGS

The above aspects and advantages of the present invention will become more apparent by describing in detail preferred embodiments thereof with reference to the attached drawings in which:
FIG. 1 is a diagram of an apparatus for uniformly illuminating a light valve, which is disclosed in U.S. Patent No. 5,625,738
FIG. 2 is a diagram showing an illumination optical system according a first embodiment of to the present invention and an image display apparatus including the illumination optical system;
FIG. 3 is a graph of transmissivity of an X-cube for light of different wavelengths depending on a change in an incident angle;
FIG. 4A is a perspective view of a simulation of an illumination optical system including an X-cube having a diffraction device for a single light source on its incident side according to the first embodiment of the present invention;
FIG. 4B is a plane view of a ring-patterned diffraction device formed on the X-cube shown in FIG.4A;
FIG. 4C is a graph of diffraction efficiency versus a radius of a diffraction device;
FIG. 5 is a diagram showing an illumination optical system according a second embodiment of to the present invention and an image display apparatus including the illumination optical system; and
FIGS. 6A and 6B are graphs of relative light intensity with respect to an angle at which light is emitted from an X-cube when the X-cube does not have a diffraction optical element (DOE) and when the X-cube has a DOE, in the illumination optical system according to the second embodiment of the present invention.

### DETAILED DESCRIPTION OF THE INVENTION

Hereinafter, preferred embodiments of an illumination optical system and an image display apparatus having the same will be described in detail with reference to the attached drawings.

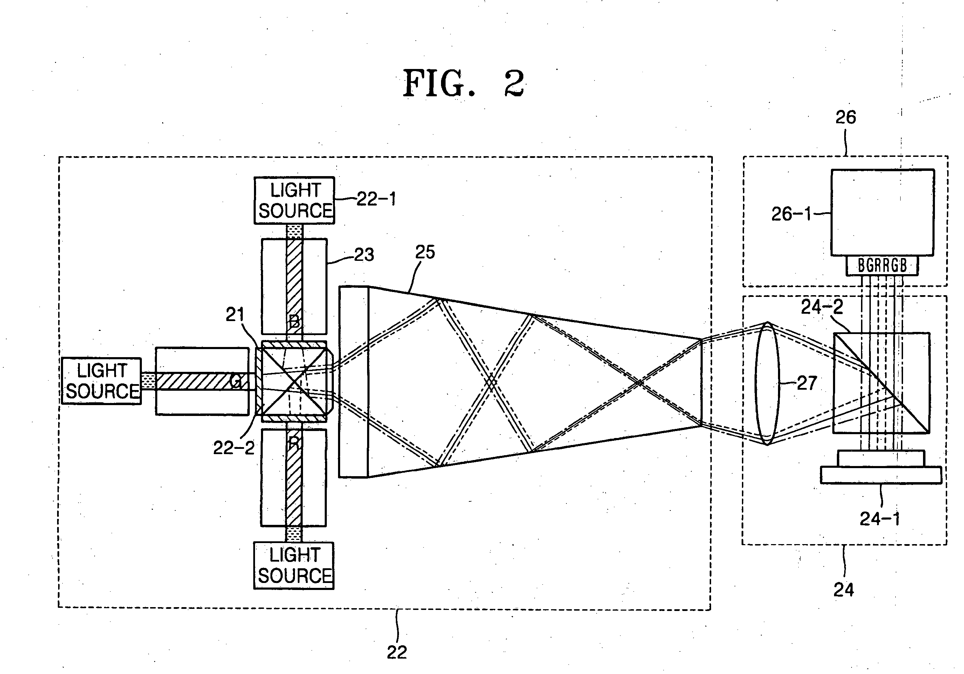

FIG. 2 is a diagram showing an illumination optical system according to a first embodiment of the present invention and an image display apparatus including the illumination optical system. Referring to FIG. 2, an illumination optical system 22 according to the first embodiment of the present invention includes light sources 22-1 emitting different color light beams having different wavelengths and an X-cube 22-2 provided with a diffraction device 21 on each light incident side. The diffraction devices 21 adjust the incident angles of different color light beams incident from the light sources 22-1, respectively. An optical fiber 23 is also provided between each light source 22-1 and corresponding sides of the X-cube 22-2 in order to adjust the incident angle of light on the X-cube 22-2 within a predetermined range. A glass road 25 is disposed on a path of light emitted from the X-cube 22-2 in order to uniformize the intensity of light.

An optical device such as a diffraction optical element (DOE) or holographic optical element (HOE) is used as the diffraction device 21 and can be directly formed on an incident side of the X-cube 22-2 or separately manufactured and then attached to the X-cube 22-2. The X-cube 22-2 is a light separation/integration device including an X-shaped coating layer transmitting or reflecting light. The coating layer of the X-cube 22-2 has different reflectivity and transmissivity depending on an incident angle of light, so it is necessary to adjust an incident angle of light on the coating layer within a predetermined range in order to reduce light loss.

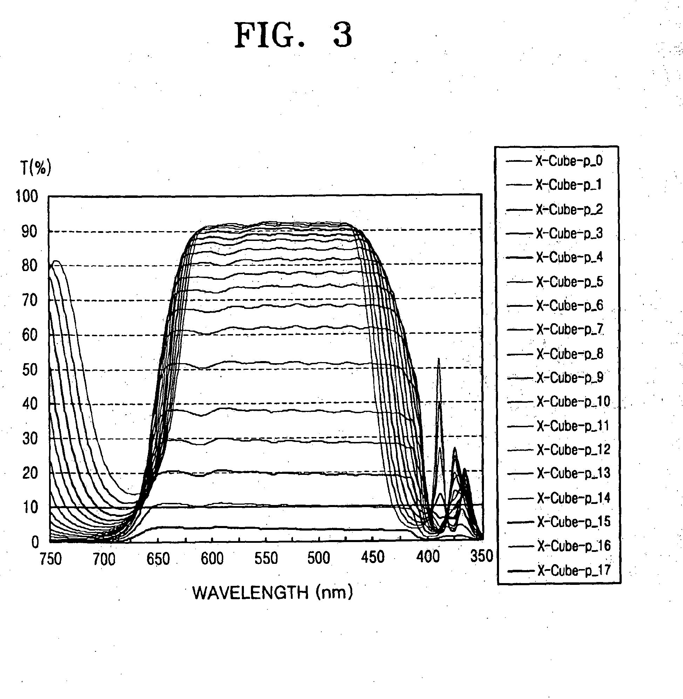

FIG. 3 is a graph of transmissivity of an X-cube for light of different wavelengths depending on a change in an incident angle. Referring to FIG. 3, transmissivity is highest when light having a wavelength ranging 400 nm to 700 nm is incident on a coating layer of the X-cube 22-2 at an angle of 0 (i.e., in case of X-Cube-p_0). As the incident angle increases, transmissivity decreases. When the incident angle exceeds 11 degrees (X-Cube-p_11) and is at least 12 degrees (X-Cube-p_12), transmissivity decreases below 50%.

The illumination optical system 22 includes the diffraction device 21 to diffract light incident from the optical fiber 23 such that the light is incident on the coating layer of the X-cube 22-2 at a diverging angle of a minimum of 0 degrees and a maximum of 4-8 degrees, thereby increasing the transmissivity of the X-cube 22-2 to 70% or over to minimize the loss of transmitted light. However, the transmissivity shown in FIG. 3 is only an example, and the transmissivity can be increased to 80% or over when a coating layer having good quality is formed. In addition, a light separation/integration device with the diffraction device 21 is not restricted to the X-cube 22-2.

The illumination optical system 22 including the X-cube 22-2 as a light separation/integration device with a diffraction device is included in an image display apparatus entirely shown in FIG. 2. Referring to FIG. 2, light is emitted from the light sources 22-1 of the illumination optical system 22, then transmitted through the optical fibers 23 with total reflection, and then separated into red (R), green (G), and blue (B) light beams having different wavelengths at the boundary of the X-cube 22-2 on which the coating layer is formed. The R, G, and B light beams are incident on an image optical system 24 and converted according to an electrical image signal to generate an image. The image is projected onto a screen (not shown) by a projection optical system 26.

The image optical system 24 includes a collecting lens 27, which collects light incident from the glass road 25; a panel 24-1, which converts light incident from the collecting lens 27 according to an electrical image signal in order to form an image; and an optical path separation device 24-2, which is disposed on the optical path between the collecting lens 27 and the panel 24-1 to reflect light incident from the collecting lens 27 to the panel 24-1 and transmit light reflected from the panel 24-1 to the projection optical system 26. A digital micromirror device (DMD) and a total internal reflection (TIR) prism can be used as the panel 24-1 and the optical path separation device 24-1, respectively. Alternatively, a liquid crystal on silicon (LCOS) and a polarization beam splitter (PBS) can be used as the panel 24-1 and the optical path separation device 24-1, respectively.

The projection optical system 26 includes a projection lens 26-1, which radiates light that has been reflected from the panel 24-1 and transmitted through the optical path separation device 24-2 on the screen, thereby reproducing the image generated by the panel 24-1. The image optical system 24 and the projection optical system 26 may also include a collecting lens or optical element guiding light when necessary.

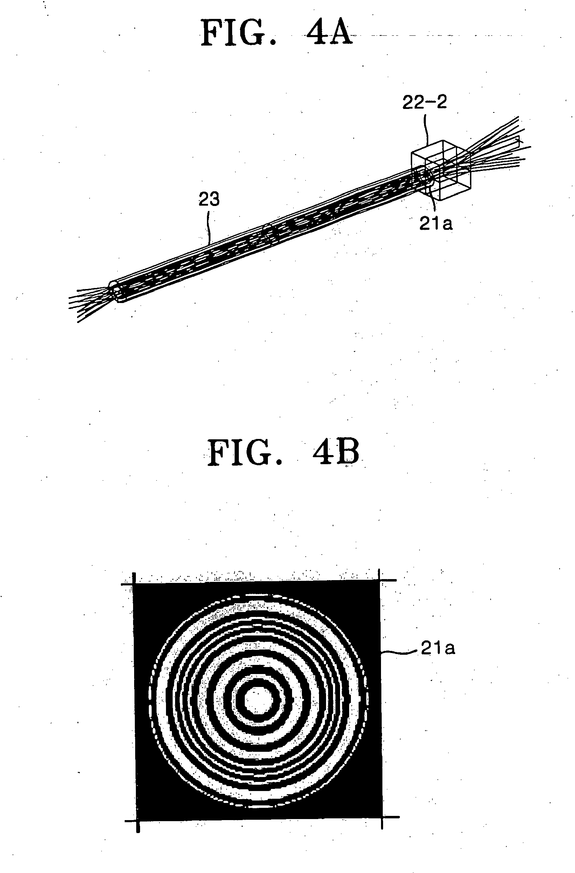

FIG. 4A is a perspective view of a simulation of an illumination optical system including an X-cube 22-2 having a diffraction device 21 a and an optical fiber 23 for a single light source on its incident side according to an embodiment of the present invention. FIG. 4B is a plane view of the diffraction device 21 a formed in a ring pattern.

Referring to FIG. 4A, light transmitted through the optical fiber 23 is diffracted by the diffraction device 21 a such that the light is incident on the X-cube 22-2 at diverging angles of a minimum of 0 degrees and a maximum of 4-8 degrees and is then output from the X-cube 22-2 with maximum light efficiency. The ring pattern formed on the X-cube 22-2 has a radius of about 0.2 nm and may be realized as a DOE, in which mechanical irregularities form a grating, or HOE, in which a interference pattern between reference light and standard light forms a grating. When the diffraction device 21 is realized as an HOE, a diffraction angle of light output can be adjusted by appropriately adjusting a grating space, i.e., pitch, and a grating depth.

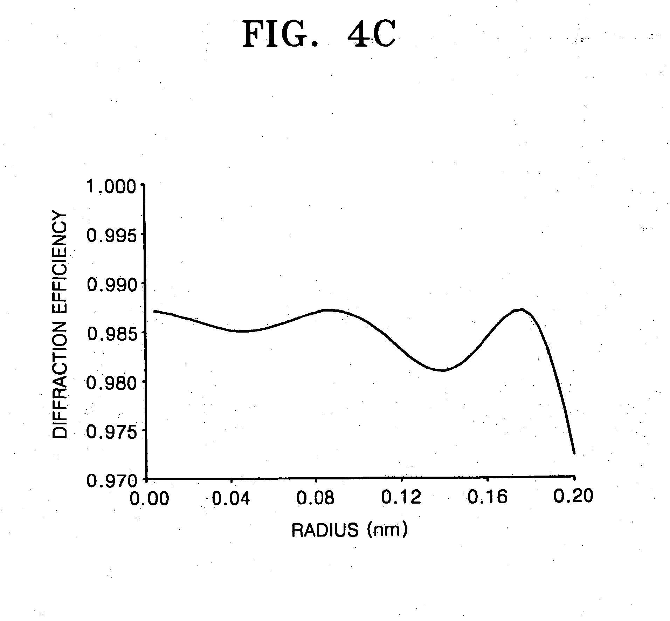

FIG. 4C is a graph of diffraction efficiency versus a radius from the center of the diffraction device 21a formed on the incident side of the X-cube 22-2. Referring to FIG. 4C, diffraction efficiency is about 98.7% at the center of the incident side. Although the diffraction efficiency repeatedly increases and decreases as the radius increases, even the minimum diffraction efficiency is greater than 97%. It can be inferred from the graph shown in FIG. 4C that the diffraction device 21a, which can adjust a diverging angle of light within a maximum of 4-8 degrees by appropriately adjusting a pitch and a grating depth, has high diffraction efficiency exceeding 97%.

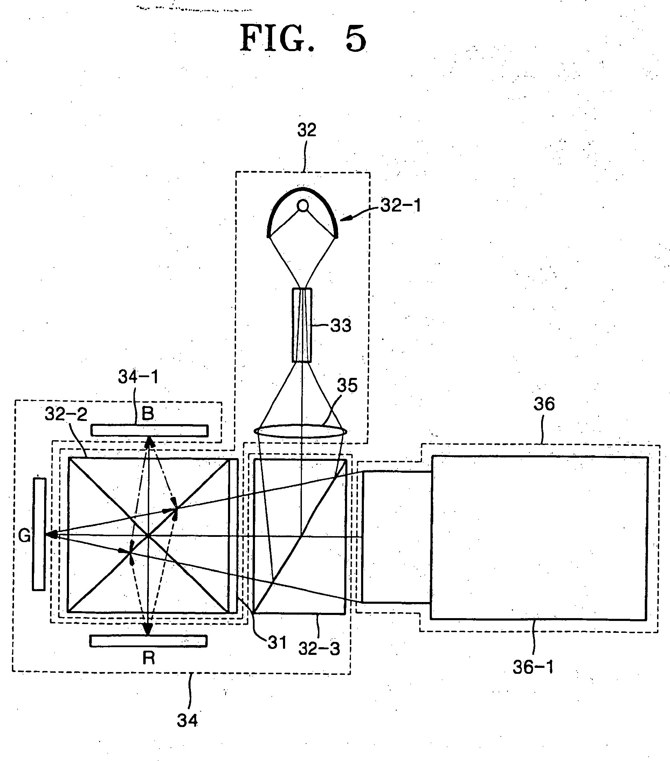

FIG. 5 is a diagram showing an illumination optical system 32 according to a second embodiment of the present invention and an image display apparatus including the illumination optical system 32. Referring to FIG. 5, the illumination optical system 32 includes a light source 32-1 emitting white light and an X-cube 32-2, which has a diffraction device 31 on its incident side to adjust a diverging angle of light incident from the light source 32-1 and a coating layer separating incident light into R, G, and B light beams by wavelengths and transmitting and reflecting the R, G, and B light beams. A glass road 33 is also provided on the optical path between the light source 32-1 and the X-cube 32-2 to uniformize light intensity. A relay lens 35 can be provided on an optical path in front of the glass road 33 in order to uniformize light intensity. The relay lens 35 can be used to collimate light. An optical path separation device 32-3 is disposed on the optical path between the relay lens 35 and the X-cube 32-2. The optical path separation device 32-3 reflects light from the relay lens 35 to the X-cube 32-2 and transmits light from the X-cube 32-2 to a projection optical system 36.

Like the diffraction device 21 included in the illumination optical system 32 according to the first embodiment of the present invention, the diffraction device 31 disposed on the incident side of the X-cube 32-2 has a grating, which ranges a diverging angle of light from a minimum of 0 degrees to a maximum of 4-8 degrees, thereby minimizing light loss during light separation and integration in the X-cube 32-2. In addition, if the diffraction device 31 included in the illumination optical system according to the second embodiment of the present invention has a power, the number of relay lenses 35 used to uniformize light intensity can be decreased, thereby making the illumination optical system 32 compact. Like the diffraction device 21 of the first embodiment, the diffraction device 31 is realized as a DOE or HOE.

The image display apparatus including the illumination optical system 32 according to the second embodiment also includes an image optical system 34 including three panels 34-1, which receives light from the illumination optical system 32 and modulates the received light according to an electrical image signal to generate an image, and a projection optical system 36 including a projection lens 36-1, which projects light reflected from the image optical system 34 onto a screen (not shown). The image optical system 34 and the projection optical system 36 may also include a collecting lens or optical element guiding light when necessary.

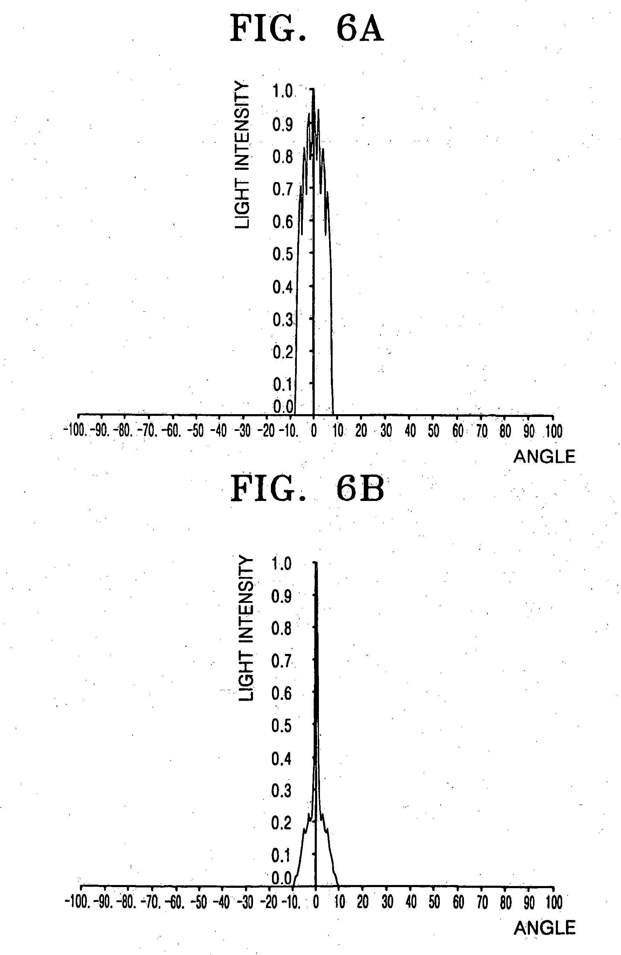

FIGS. 6A and 6B are graphs of relative light intensity with respect to an angle at which light is emitted from the X-cube 31 when the X-cube 31 does not have a DOE and when the X-cube 31 has a DOE, in the illumination optical system according to the second embodiment. Referring to FIG. 6A, when the X-cube 31 does not have a DOE, light intensity is uniform at an angle ranging from 0 to ±10, so it can be inferred that light loss increases as light proceeds. Conversely, referring to FIG. 6B, when the X-cube 31 has a DOE, light intensity is high at an angle around 0 degrees and thus has a delta-function distribution. Accordingly, it is inferred that light loss remarkably decreases although light proceeds.

The present invention provides a diffraction device for a light separation/integration device such as an X-cube to adjust a diverging angle of light incident on the light separation/integration device such that the light is transmitted through and reflected from a coating layer within the X-cube, thereby decreasing light loss and increasing the efficiency of light output to an image optical system and a projection optical system. In addition, since the present invention provides a diffraction device having a power, the number of relay lenses included in an illumination optical system can be decreased, thereby making it possible to manufacture a light, thin, simple, and compact image display apparatus.

While this invention has been particularly shown and described with reference to preferred embodiments thereof, the preferred embodiments should be considered in descriptive sense only and not for purposes of limitation. For example, it will be understood by those skilled in the art that various diffraction devices and light separation/integration devices including the same can be used. Therefore, the scope of the invention is defined not by the detailed description of the invention but by the appended claims.

As described above, according to an illumination optical system of the present invention and an image display apparatus including the same, a diffraction device is provided for a light separation/integration device to make light incident on the light separation/integration device at a diverging angle within a predetermined range, thereby minimizing light loss in the light separation/integration device. In addition, since the diffraction device can be provided with a power, the number of relay lenses can be decreased, thereby making it possible to manufacture a light, thin, simple, and compact image display apparatus.

## Claims

1. An illumination optical system (22, 32) comprising:
a light source (22-1, 32-1) emitting light; and
a light separation/integration device (22-2, 32-2), wherein the light separation/integration device (22-2, 32-2) is an X-cube,
**characterized in that**
the light separation/integration device (22-2, 32-2) includes a diffraction device (21, 31) not separately manufactured and then attached to the X-cube but directly formed on at least one incident side, and
the diffraction device (21, 31) is configured to diffract the light such that the light is incident on a coating layer of the X-cube at a diverging angle of a minimum of 0° and a maximum of 8°,

2. The illumination optical system (22, 32) of claim 1, wherein the diffraction device (21, 31) is a diffraction optical element or holographic optical element.

3. The illumination optical system (22, 32) of claim 1 or 2, further comprising a light guide unit (23) on the optical path between the light source (22-1, 32-1) and the light separation/integration device (22-2, 32-2).

4. The illumination optical system (22, 32) of claim 3, wherein the light guide unit (23) is an optical fiber.

5. The illumination optical system (22, 32) of one of the claims 1 to 4, further comprising a relay lens unit (35) between the light source (22-1, 32-1) and the light separation/integration device (22-2, 32-2).

6. The illumination optical system (22, 32) of one of the claims 1 to 5, further comprising an optical path separation device, which reflects incident light and makes output light going straight ahead, between the light source (22-1, 32-1) and the light separation/integration device (22-2, 32-2).

7. The illumination optical system (22, 32) of claim 6, wherein the optical path separation device is a total internal reflection prism.

8. An image display apparatus comprising:
the illumination optical system (22, 32) of one of claims 1 to 7;
an image optical system (24, 34), which modulates light incident from the illumination optical system (22, 32) to form an image; and
a projection optical system (26, 36), which projects light reflected from the image optical system (24, 34) onto a screen.

9. The image display apparatus of claim 8, wherein the image optical system (24, 34) comprises a panel (24-1, R, G, B), which modulates the light incident from the illumination optical system (22, 32) according to an image signal to generate an image.

10. The image display apparatus of claim 8 or 9, wherein the illumination optical system (22, 32) further includes a glass rod (25, 33) uniformizing intensity of light between the light separation/integration device (22-2, 32-2) and the panel (24-1, R, G, B).

11. The image display apparatus of one of the claims 8 to 10, wherein the image optical system (24, 34) further comprises an optical path separation device (24-2, 32-3), which reflects incident light and transmits light going straight ahead, on the optical path between the panel (24-1, R, G, B) and the projection optical system (26, 36).

12. The image display apparatus claim 11 in combination with claim 10, wherein the image optical system (24, 34) further comprises a collecting lens (27) on the optical path between the glass rod (25, 33) and the optical path separation device (24-2, 32-3).

13. The image display apparatus of one of the claims 8 to 12, wherein the projection optical system (26, 36) comprises a projection lens projecting the image formed by the image optical system (24, 34) onto the screen.

14. The image display apparatus of one of the claims 8 to 13, wherein the image optical system (24, 34) comprises a relay lens unit on the optical path between the light separation/integration device (22-2, 32-2) and the projection optical system (26, 36).

15. The image display apparatus of claim 11, wherein the optical path separation device (24-2, 32-3) is a total internal reflection (TIR) prism.

16. The image display apparatus of claim 12 wherein the optical path separation device (24-2) is disposed on the optical path between the collecting lens (27) and the panel (24-1) to reflect light incident from the collecting lens (27) to the panel (24-1) and transmit light reflected from the panel (24-1) to the projection optical system (26).

17. The image display apparatus of one of the claims 8 to 16 in combination with claim 5 wherein the optical path separation device (32-3) is disposed on the optical path between the relay lens (35) and the X-cube (32-2) to reflect light from the relay lens (35) to the X-cube (32-2) and transmits light from the X-cube (32-2) to a projection optical system 36.

## Patentansprüche

1. Optisches Beleuchtungssystem (22, 32), umfassend:
eine Lichtquelle (22-1, 32-1), die Licht emittiert; und
eine Lichtabtrennungs-/Integrationsvorrichtung (22-2, 32-2), wobei die Lichtabtrennungs-/Integrationsvorrichtung (22-2, 32-2) ein X-Cube ist,
**dadurch gekennzeichnet, dass**
die Lichtabtrennungs-/Integrationsvorrichtung (22-2, 32-2) eine Beugungsvorrichtung (21, 31) aufweist, die nicht separat hergestellt und dann an dem X-Cube befestigt wird, sondern direkt auf mindestens einer Einfallsseite ausgebildet wird, und
die Beugungsvorrichtung (21, 31) dazu konfiguriert ist, das Licht so zu beugen, dass das Licht auf einer Beschichtung des X-Cubes in einem divergierenden Winkel von mindestens 0° und maximal 8° einfällt.

2. Optisches Beleuchtungssystem (22, 32) nach Anspruch 1, wobei die Beugungsvorrichtung (21, 31) ein beugungsoptisches Element oder ein holographisch-optisches Element ist.

3. Optisches Beleuchtungssystem (22, 32) nach Anspruch 1 oder 2, des Weiteren umfassend eine Lichtleiteinheit (23) an dem optischen Lichtweg zwischen der Lichtquelle (22-1, 32-1) und der Lichtabtrennungs-/Integrationsvorrichtung (22-2, 32-2).

4. Optisches Beleuchtungssystem (22, 32) nach Anspruch 3, wobei die Lichtleiteinheit (23) eine Lichtleitfaser ist.

5. Optisches Beleuchtungssystem (22, 32) nach einem der Ansprüche 1 bis 4, des Weiteren umfassend eine Relaislinseneinheit (35) zwischen der Lichtquelle (22-1, 32-1) und der Lichtabtrennungs-/Integrationsvorrichtung (22-2, 32-2).

6. Optisches Beleuchtungssystem (22, 32) nach einem der Ansprüche 1 bis 5, des Weiteren umfassend eine Lichtweg-Abtrennungsvorrichtung, die einfallendes Licht reflektiert und ausgehendes Licht geradeaus leitet, zwischen der Lichtquelle (22-1, 32-1) und der Lichtabtrennungs-/Integrationsvorrichtung (22-2, 32-2).

7. Optisches Beleuchtungssystem (22, 32) nach Anspruch 6, wobei die Lichtweg-Abtrennungsvorrichtung ein Totalreflexionsprisma ist.

8. Bildanzeigeeinrichtung, umfassend:
das optische Beleuchtungssystem (22, 32) nach einem der Ansprüche 1 bis 7;
ein optisches Bildsystem (24, 34), das von dem optischen Beleuchtungssystem (22, 32) einfallendes Licht so moduliert, dass ein Bild entsteht; und
ein optisches Projektionssystem (26, 36), das von dem optischen Bildsystem (24, 34) reflektiertes Licht auf einen Bildschirm projiziert.

9. Bildanzeigeeinrichtung nach Anspruch 8, wobei das optische Bildsystem (24, 34) ein Feld (24-1, R, G, B) umfasst, welches das von dem optischen Beleuchtungssystem (22, 32) einfallende Licht gemäß einem Bildsignal moduliert, um ein Bild zu erzeugen.

10. Bildanzeigeeinrichtung nach Anspruch 8 oder 9, wobei das optische Beleuchtungssystem (22, 32) des Weiteren einen Glasstab (25, 33) aufweist, der die Intensität des Lichts zwischen der Lichtabtrennungs-/Integrationsvorrichtung (22-2, 32-2) und dem Feld (24-1, R, G, B) uniformiert.

11. Bildanzeigeeinrichtung nach einem der Ansprüche 8 bis 10, wobei das optische Bildsystem (24, 34) des Weiteren eine Lichtweg-Abtrennungsvorrichtung (24-2, 32-3), die einfallendes Licht reflektiert und geradeaus verlaufendes Licht weiterleitet, an dem Lichtweg zwischen dem Feld (24-1, R, G, B) und dem optischen Projektionssystem (26, 36) umfasst.

12. Bildanzeigeeinrichtung nach Anspruch 11 in Kombination mit Anspruch 10, wobei das optische Bildsystem (24, 34) das Weiteren eine Sammellinse (27) an dem Lichtweg zwischen dem Glasstab (25, 33) und der Lichtweg-Abtrennungsvorrichtung (24-2, 32-3) umfasst.

13. Bildanzeigeeinrichtung nach einem der Ansprüche 8 bis 12, wobei das optische Projektionssystem (26, 36) eine Projektionslinse umfasst, die das von dem optischen Bildsystem (24, 34) gebildete Bild auf den Bildschirm projiziert.

14. Bildanzeigeeinrichtung nach einem der Ansprüche 8 bis 13, wobei das optische Bildsystem (24, 34) eine Relaislinseneinheit an dem Lichtweg zwischen der Lichtabtrennungs-/Integrationsvorrichtung (22-2, 32-2) und dem optischen Projektionssystem (26, 36) umfasst.

15. Bildanzeigeeinrichtung nach Anspruch 11, wobei die Lichtweg-Abtrennungsvorrichtung (24-2, 32-3) ein Totalreflexionsprisma (TIR) ist.

16. Bildanzeigeeinrichtung nach Anspruch 12, wobei die Lichtweg-Abtrennungsvorrichtung (24-2) an dem Lichtweg zwischen der Sammellinse (27) und dem Feld (24-1) angeordnet ist, um von der Sammellinse (27) einfallendes Licht auf das Feld (24-1) zu reflektieren und von dem Feld (24-1) reflektiertes Licht an das optische Projektionssystem (26) weiterzuleiten.

17. Bildanzeigeeinrichtung nach einem der Ansprüche 8 bis 16 in Kombination mit Anspruch 5, wobei die Lichtweg-Abtrennungsvorrichtung (32-3) an dem Lichtweg zwischen der Relaislinse (35) und dem X-Cube (32-2) angeordnet ist, um Licht von der Relaislinse (35) auf den X-Cube (32-2) zu reflektieren und Licht von dem X-Cube (32-2) an ein optische Projektionssystem (36) weiterzuleiten.

## Revendications

1. Système optique d'éclairage (22, 32) comprenant :
une source lumineuse (22-1, 32-1) qui émet de la lumière ; et
un dispositif de séparation/intégration de lumière (22-2, 32-2), dans lequel le dispositif de séparation/intégration de lumière (22-2, 32-2) est une ampoule-flash,
**caractérisé en ce que**
le dispositif de séparation/intégration de lumière (22-2, 32-2) comprend un dispositif de diffraction (21, 31) qui n'est pas fabriqué séparément et ensuite attaché à l'ampoule-flash, mais qui est directement formé sur au moins un côté incident, et
le dispositif de diffraction (21, 31) est configuré pour diffracter la lumière de telle sorte que la lumière est incidente à une couche de revêtement de l'ampoule-flash à un angle divergeant d'au minimum 0° et d'au maximum 8°.

2. Système optique d'éclairage (22, 32) selon la revendication 1, dans lequel le dispositif de diffraction (21, 31) est un élément optique à diffraction ou un élément optique holographique.

3. Système optique d'éclairage (22, 32) selon la revendication 1 ou 2, comprenant en outre une unité de guidage de lumière (23) sur le chemin optique entre la source lumineuse (22-1, 32-1) et le dispositif de séparation/intégration de lumière (22-2, 32-2).

4. Système optique d'éclairage (22, 32) selon la revendication 3, dans lequel l'unité de guidage de lumière (23) est une fibre optique.

5. Système optique d'éclairage (22, 32) selon l'une des revendications 1 à 4, comprenant en outre une unité à lentille relais (35) entre la source lumineuse (22-1, 32-1) et le dispositif de séparation/intégration de lumière (22-2, 32-2).

6. Système optique d'éclairage (22, 32) selon l'une des revendications 1 à 5, comprenant en outre un dispositif de séparation de chemin optique qui réfléchit la lumière incidente et qui dirige la lumière de sortie tout droit entre la source lumineuse (22-1, 32-1) et le dispositif de séparation/intégration de lumière (22-2, 32-2).

7. Système optique d'éclairage (22, 32) selon la revendication 6, dans lequel le dispositif de séparation de chemin optique est un prisme à réflexion interne totale.

8. Appareil d'affichage d'image comprenant :
le système optique d'éclairage (22, 32) selon l'une des revendications 1 à 7 ;
un système optique d'image (24, 34) qui module la lumière incidente provenant du système optique d'éclairage (22, 32) afin de former une image ; et
un système optique de projection (26, 36) qui projette la lumière réfléchie provenant du système optique d'image (24, 34) sur un écran.

9. Appareil d'affichage d'image selon la revendication 8, dans lequel le système optique d'image (24, 34) comprend un panneau (24-1, R, G, B) qui module la lumière incidente provenant du système optique d'éclairage (22, 32) conformément à un signal d'image afin de générer une image.

10. Appareil d'affichage d'image selon la revendication 8 ou 9, dans lequel le système optique d'éclairage (22, 32) comprend en outre une tige de verre (25, 33) qui uniformise l'intensité de la lumière entre le dispositif de séparation/intégration de lumière (22-2, 32-2) et le panneau (24-1, R, G, B).

11. Appareil d'affichage d'image selon l'une des revendications 8 à 10, dans lequel le système optique d'image (24, 34) comprend en outre un dispositif de séparation de chemin optique (24-2, 32-3) qui réfléchit la lumière incidente et transmet la lumière en allant tout droit selon le chemin optique entre le panneau (24-1, R, G, B) et le système optique de projection (26, 36).

12. Appareil d'affichage d'image selon la revendication 11 en combinaison avec la revendication 10, dans lequel le système optique d'image (24, 34) comprend en outre une lentille de collecte (27) sur le chemin optique entre la tige de verre (25, 33) et le dispositif de séparation de chemin optique (24-2, 32-3).

13. Appareil d'affichage d'image selon l'une des revendications 8 à 12, dans lequel le système optique de projection (26, 36) comprend une lentille de projection qui projette l'image formée par le système optique d'image (24, 34) sur l'écran.

14. Appareil d'affichage d'image selon l'une des revendications 8 à 13, dans lequel le système optique d'image (24, 34) comprend une unité à lentille relais sur le chemin optique entre le dispositif de séparation/intégration de lumière (22-2, 32-2) et le système optique de projection (26, 36).

15. Appareil d'affichage d'image selon la revendication 11, dans lequel le dispositif de séparation de chemin optique (24-2, 32-3) est un prisme à réflexion interne totale (TIR).

16. Appareil d'affichage d'image selon la revendication 12, dans lequel le dispositif de séparation de chemin optique (24-2) est agencé sur le chemin optique entre la lentille de collecte (27) et le panneau (24-1) pour réfléchir la lumière incidente provenant de la lentille de collecte (27) vers le panneau (24-1) et transmettre la lumière réfléchie provenant du panneau (24-1) vers le système optique de projection (26).

17. Appareil d'affichage d'image selon l'une des revendications 8 à 16 en combinaison avec la revendication 5, dans lequel le dispositif de séparation de chemin optique (32-3) est agencé sur le chemin optique entre la lentille relais (35) et l'ampoule-flash (32-2) pour réfléchir la lumière provenant de la lentille relais (35) vers l'ampoule-flash (32-2) et transmettre la lumière provenant de l'ampoule-flash (32-2) à un système optique de projection 36.
